# FASCICULE DE BREVET EUROPEEN

(11) **EP 4 516 683 B1**
(45) Date de publication et mention de la délivrance du brevet: **15.10.2025**
(21) Numéro de dépôt: 24185882.8
(22) Date de dépôt: 02.07.2024
(51) Int. Cl.: B64F 5/40

(54) **PROCÉDÉ DE RÉPARATION D'UNE PIÈCE STRUCTURALE D'UN AÉRONEF PRÉSENTANT UN DÉFAUT DE PROTECTION, ET PIÈCE STRUCTURALE D'AÉRONEF AINSI RÉPARÉE**
VERFAHREN ZUR REPARATUR EINES STRUKTURBAUTEILS EINES FLUGZEUGS MIT EINEM SCHUTZFEHLER UND DADURCH REPARIERTES FLUGZEUGSTRUKTURTEIL
METHOD FOR REPAIRING A STRUCTURAL PART OF AN AIRCRAFT HAVING A PROTECTION DEFECT, AND AIRCRAFT STRUCTURAL PART REPAIRED IN THIS WAY

(30) Priorité: 31.08.2023 FR 2309139
(43) Date de publication de la demande: 05.03.2025
(73) Titulaire: AIRBUS OPERATIONS (S.A.S.), 31060 Toulouse (FR)
(72) Inventeur: CHESNEAU, Marine, Toulouse (FR); BEDU, Mélanie, Toulouse (FR); CHIROL, Clément, Toulouse (FR)
(74) Mandataire: Airbus-OPS SAS

(56) Documents cités:
- US-A- 4 755 904
- US-A- 5 845 872
- US-A1- 2009 178 262
- US-B2- 7 686 905

## Description

### DOMAINE TECHNIQUE

La présente demande se rapporte à un procédé de réparation d'un défaut de protection, par exemple un défaut de peinture, présent sur une zone d'une pièce structurale d'un aéronef, ladite zone de la pièce structurale présentant un orifice de réception de moyens de fixation à proximité dudit défaut de protection. La présente demande se rapporte également à une pièce structurale d'aéronef ayant subi un tel procédé de réparation.

### ÉTAT DE LA TECHNIQUE ANTÉRIEURE

De façon connue, les éléments de la structure d'un aéronef constituant une interface avec le réservoir de carburant dudit aéronef, comme par exemple la voilure, ou le caisson central de voilure de l'aéronef, réalisés en métal, par exemple en alliage d'aluminium, sont soumis à un traitement de surface, puis sont recouverts d'au moins une couche de peinture (anodisation, peinture primaire et peinture de finition), afin de lui apporter une protection active contre la corrosion, ainsi qu'une fonction isolante contre le risque d'étincelage en zone frontière avec le réservoir de carburant.

Les différentes pièces de la structure d'un aéronef sont assemblées entre elles par des éléments de fixation, de manière à former la structure de l'aéronef.

Lors de la fabrication d'une pièce structurale métallique ou en alliage d'aluminium de l'aéronef, ou plus généralement lors de l'assemblage des différentes parties constituant la structure de l'aéronef, des endommagements, tels que des rayures ou des impacts, peuvent être faits sur la peinture de la pièce structurale, notamment par des outils de perçage, ou lors les opérations de montage/démontage des fixations (temporaires ou définitives). Ces endommagements nécessitent d'être réparés afin que l'intégralité de la structure soit protégée, notamment contre la corrosion.

Afin de réparer ces endommagements sur la peinture, la surface abîmée de la pièce structurale de l'aéronef est tout d'abord poncée de manière à ragréer la surface de ladite pièce structurale et garantir une surface sans fissure, puis un traitement de surface peut être appliqué sur la surface poncée afin de permettre une meilleure accroche de la peinture. Une première couche de peinture primaire (contenant des inhibiteurs de corrosion) est appliquée sur la surface traitée afin de conférer à la pièce structurale des propriétés anti-corrosion, et enfin, optionnellement, une deuxième couche de peinture de finition ("topcoat" en terminologie anglaise) est appliquée sur la surface de la pièce structurale, au niveau de la zone qui était endommagée. Ce système de protection permet d'assurer la protection contre la corrosion et la fonction isolante vis-à-vis des éléments de fixations requise en cas d'étincelle lors d'un foudroiement. Une fois ces étapes effectuées, le défaut de protection n'est plus visible et la réparation est terminée.

Un temps de séchage doit toutefois être respecté entre le traitement de surface et la couche de peinture primaire, puis entre la couche de peinture primaire et la couche de peinture de finition. Afin de pouvoir ensuite installer des fixations sur la structure de l'aéronef, il est également nécessaire de respecter un temps de séchage après application de la dernière couche de peinture. Ces temps de séchage sont nécessaires pour la polymérisation de la résine contenue dans la peinture appliquée sur la structure. Ces temps de séchage sont toutefois relativement longs (supérieurs à 24h). Si ces temps de séchage ne sont pas respectés, les propriétés anti-corrosion et anti-foudre de la structure de l'aéronef ne peuvent être garanties.

En effet, lorsqu'un endommagement sur la peinture d'une pièce structurale apparaît à proximité d'un élément de fixation, si l'élément de fixation est installé sur une peinture dont le temps de séchage n'a pas été respecté, il y a un risque de craquelure ou de fluage de la peinture, ce qui induit un risque que le matériau métallique de l'élément de fixation soit en contact avec le matériau métallique constituant le substrat de la pièce structurale. Ceci a pour conséquence que le risque de corrosion galvanique entre l'élément de fixation et le substrat de la pièce structurale est augmenté, et les exigences électromagnétiques (EMH, pour "ElectroMagnetic Hazards" en terminologie anglaise, signifiant dangers électromagnétiques) ne sont pas assurées. En effet, la barrière isolante entre la pièce structurale de l'aéronef et l'élément de fixation, réalisée normalement par les différentes couches de peinture, n'est pas garantie.

En outre, les réparations des endommagements sur la peinture de la structure sont généralement réalisées dans des zones confinées à accès restreint qui rendent complexe voir impossible la mise en œuvre de moyens de séchage accéléré. Le séchage à température ambiante prend des dizaines d'heures ce qui impacte fortement les cycles de production.

La présente invention vise à remédier à ces inconvénients. Le document US 7 686 905 B2 décrit un procédé pour rétablir la continuité électrique d'une couche électriquement conductrice d'une aile d'aéronef composite endommagée par un impact de foudre ou un autre événement mécanique décrit, dans lequel une pastille de cuivre remplace la section endommagée de la couche électriquement conductrice contenue. La réparation est effectuée en retirant d'abord tous les agents de surface, fixations et couche électriquement conductrice endommagée pour exposer une partie de la peau composite sous-jacente. Une pastille de cuivre ayant une section de feuille de cuivre couplée à un adhésif en film non supporté est ensuite introduite sur une ouverture de peau composite sous-jacente contenue à l'intérieur d'une section non endommagée d'une grille de feuille de cuivre et recouverte d'un matériau en fibre de verre imprégné de résine. L'adhésif en film et le matériau en fibre de verre imprégné de résine sont ensuite durcis et les fixations sont ensuite réinsérées dans le matériau en fibre de verre, la pastille de cuivre et la peau composite sous-jacente. La surface de l'aile composite est ensuite réapprêtée et repeinte pour achever la réparation.

### RÉSUMÉ DE L'INVENTION

La présente invention vise à proposer une solution permettant de restaurer la barrière isolante entre le matériau métallique constituant les moyens de fixation de deux pièces structurales d'aéronef entre elles et le matériau métallique constituant lesdites pièces structurales d'aéronef, en introduisant des moyens d'isolation.

A cet effet, l'invention a pour objet un procédé de réparation d'une zone d'une pièce structurale métallique d'un aéronef présentant un défaut de protection, ladite zone de la pièce structurale présentant un premier orifice de réception de moyens de fixation métalliques, ledit premier orifice présentant un premier diamètre. Le procédé de réparation comprend:
- une étape de ponçage au cours de laquelle la peinture de ladite zone de la pièce structurale d'aéronef est poncée.

Selon l'invention, le procédé de réparation comprend également:
- une étape de disposition de moyens d'isolation au cours de laquelle des moyens d'isolation sont disposés sur ladite zone de la pièce structurale d'aéronef poncée autour dudit premier orifice, lesdits moyens d'isolation comportant un deuxième orifice présentant un deuxième diamètre sensiblement égal au premier diamètre du premier orifice, lesdits moyens d'isolation étant disposés sur ladite zone de la pièce structurale d'aéronef poncée autour du premier orifice de manière à ce que lesdits premier et deuxième orifices soient coaxiaux,
- une étape d'application d'au moins une couche de peinture au cours de laquelle une couche de peinture primaire est appliquée sur la zone de la pièce structurale d'aéronef poncée, ladite couche de peinture primaire étant appliquée sur lesdits moyens d'isolation.

Avantageusement, l'introduction des moyens d'isolation permet d'éviter un contact direct entre les moyens de fixation (réalisés en matériau métallique) destinés à être insérés dans la premier orifice et la pièce structurale d'aéronef (également réalisée en matériau métallique tel que de l'alliage d'aluminium).

Selon une caractéristique, le procédé de réparation comprend, préalablement à l'étape de disposition des moyens d'isolation, une étape d'insertion de moyens de fixation au cours de laquelle des moyens de fixation sont insérés dans le deuxième orifice des moyens d'isolation, et au cours de l'étape de disposition des moyens d'isolation, les moyens de fixation sont insérés dans le premier orifice, et au cours de l'étape d'application de la couche de peinture, ladite couche de peinture est appliquée sur lesdits moyens de fixation.

Avantageusement, les moyens de fixation sont installés de sorte à être en contact direct avec les moyens d'isolation, et ne sont pas plus en contact avec la zone de la pièce structurale d'aéronef, ce qui permet d'éviter un contact entre le matériau métallique des moyens de fixation et le matériau métallique constituant la structure d'aéronef.

Selon une autre caractéristique, les moyens de fixation prennent la forme d'une tige présentant des première et deuxième extrémités, et une tête à ladite première extrémité, lesdits moyens de fixation étant insérés dans les premier et deuxième orifices par la deuxième extrémité de la tige, le diamètre externe des moyens d'isolation étant supérieur au diamètre de la tête des moyens de fixation.

Selon cette caractéristique, au cours de l'étape d'insertion de moyens de fixation, la tête desdits moyens de fixation vient en appui contre les moyens d'isolation.

Selon une autre caractéristique, le procédé de réparation comprend, préalablement à l'étape d'application de la couche de peinture, une étape d'insertion de moyens de fixation au cours de laquelle des moyens de fixation sont insérés dans le deuxième orifice des moyens d'isolation et dans le premier orifice, et au cours de l'étape d'application de la couche de peinture, ladite couche de peinture est appliquée sur lesdits moyens de fixation.

Selon une caractéristique, le procédé de réparation comprend, préalablement à l'étape d'application de la couche de peinture, une étape de disposition de moyens de masquage au cours de laquelle des moyens de masquage sont disposés dans les premier et deuxième orifices, et après l'étape d'application de la couche de peinture, une étape de retrait des moyens de masquage au cours de laquelle les moyens de masquage sont retirés des premier et deuxième orifices, et une étape d'insertion des moyens de fixation au cours de laquelle des moyens de fixation sont insérés dans les premier et deuxième orifices.

Selon une caractéristique, au cours de l'étape d'insertion de moyens de fixation, la tête desdits moyens de fixation vient en appui contre la couche de peinture.

Avantageusement, l'introduction des moyens d'isolation permet de s'affranchir du temps de séchage de la peinture pour l'installation des moyens de fixation. En effet, les moyens d'isolation permettent d'éviter un contact direct entre le matériau métallique des moyens de fixation et le matériau métallique constituant la structure d'aéronef, même en cas de craquelure ou de fluage de la peinture appliquée entre la tête des moyens de fixation et les moyens d'isolement.

Selon une autre caractéristique, le procédé de réparation comprend, après l'étape de ponçage, une étape de traitement de surface au cours de laquelle un revêtement de conversion chimique ou un apprêt réactif est appliqué sur au moins une partie de ladite zone de la pièce structurale d'aéronef poncée.

L'invention a également pour objet un assemblage structural d'aéronef comportant une première pièce structurale métallique et une deuxième pièce structurale, la première pièce structurale présentant au moins un premier orifice de réception de moyens de fixation , ledit premier orifice présentant un premier diamètre, les première et deuxième pièces structurales étant fixées entre elles par des moyens de fixation métalliques insérés dans ledit premier orifice.

Selon l'invention, la structure d'aéronef comprend également des moyens d'isolation présentant un deuxième orifice présentant un deuxième diamètre sensiblement égal au premier diamètre du premier orifice, lesdits moyens d'isolation étant disposés sur la première pièce structurale autour du premier orifice de manière à ce que lesdits premier et deuxième orifices soient coaxiaux, les moyens de fixation étant insérés dans le deuxième orifice et dans le premier orifice.

L'invention a ainsi pour objet une pièce structurale métallique d'aéronef présentant une zone réparée au moyen du procédé de réparation selon l'invention.

Selon une caractéristique, les moyens de fixation prennent la forme d'une tige présentant des première et deuxième extrémités, et une tête à ladite première extrémité, lesdits moyens de fixation étant insérés dans les premier et deuxième orifices par la deuxième extrémité de la tige, le diamètre externe des moyens d'isolation étant supérieur au diamètre de la tête des moyens de fixation, la première pièce structurale étant recouverte d'une couche de peinture primaire. Selon cette caractéristique, la tête desdits moyens de fixation vient en appui contre lesdits moyens d'isolation, et lesdits moyens d'isolation et lesdits moyens de fixation sont recouverts de ladite couche de peinture.

Selon une autre caractéristique, la tête desdits moyens de fixation vient en appui contre la couche de peinture.

Avantageusement, les moyens de fixation sont installés après application de la couche de peinture, et de ce fait sont soit en contact direct avec une couche de peinture de la pièce structurale d'aéronef, soit en contact avec les moyens d'isolation (si le temps de séchage de la couche de peinture n'a pu être respecté et que ladite couche de peinture a été repoussée par la pression en dehors de la zone de contact entre les moyens de fixation et la pièce structurale d'aéronef lors de la mise en place desdits moyens de fixation). Dans tous les cas, les moyens de fixation ne sont pas directement en contact avec la zone de la pièce structurale d'aéronef, ce qui permet d'éviter un contact entre le matériau métallique des moyens de fixation et le matériau métallique constituant la structure de l'aéronef.

Selon une autre caractéristique, les moyens d'isolation prennent la forme d'un adhésif sensible à la pression enduit sur un matériau de support.

Avantageusement, les moyens d'isolation peuvent ainsi adhérer à la zone de la pièce structurale d'aéronef poncée, et être comprimés par les moyens de fixation lors de la mise en place de ces derniers. Ceci permet de garantir que les moyens d'isolation forment une barrière isolante entre les moyens de fixation et la zone de la pièce structurale d'aéronef. Selon une autre caractéristique, les moyens d'isolation sont réalisés en vinyle, en polyuréthane ou en époxy.

Selon une autre caractéristique, les moyens d'isolation comportent un inhibiteur de corrosion.

Selon une autre caractéristique, les moyens d'isolation ont une épaisseur comprise entre 30 et 200 microns.

### BRÈVE DESCRIPTION DES DESSINS

D'autres caractéristiques et avantages ressortiront de la description de l'invention qui va suivre, description donnée à titre d'exemple uniquement, en regard des dessins annexés parmi lesquels :
Fig. 1 est une vue de dessus d'une zone d'une pièce structurale d'un aéronef présentant un défaut de protection,
Fig. 2 est une vue en coupe de la Figure 1, selon la coupe I-I,
Fig. 3 est un organigramme des étapes du procédé de réparation d'une zone d'une pièce structurale d'aéronef présentant un défaut de protection, qui illustre un mode de réalisation de l'invention,
Fig. 4 est une vue de dessus d'une zone de la pièce structurale d'un aéronef, lors d'une étape du procédé de réparation selon un mode de réalisation de l'invention,
Fig. 5 est une vue en coupe de la Figure 4, selon la coupe IV-IV,
Fig. 6 est une vue de dessus d'une zone de la pièce structurale d'un aéronef, lors d'une autre étape du procédé de réparation selon un mode de réalisation de l'invention,
Fig. 7 est une vue en coupe de la Figure 6, selon la coupe VI-VI,
Fig. 8 est une vue de dessus d'une zone de la pièce structurale d'un aéronef, lors d'une autre étape du procédé de réparation selon un mode de réalisation de l'invention,
Fig. 9 est une vue en coupe de la Figure 8, selon la coupe VIII-VIII,
Fig. 10 est une vue de dessus d'une zone de la pièce structurale d'un aéronef, lors d'une autre étape du procédé de réparation selon un mode de réalisation de l'invention,
Fig. 11 est une vue en coupe de la Figure 10, selon la coupe X-X,
Fig. 12 est une vue de dessus d'une zone de la pièce structurale d'un aéronef, lors d'une étape du procédé de réparation selon un autre mode de réalisation de l'invention,
Fig. 13 est une vue en coupe de la Figure 12, selon la coupe XII-XII,
Fig. 14 est une vue de dessus d'une zone de la pièce structurale d'un aéronef, lors d'une autre étape du procédé de réparation selon un autre mode de réalisation de l'invention,
Fig. 15 est une vue en coupe de la Figure 14, selon la coupe XIV-XIV,
Fig. 16 est une vue en coupe d'une zone de la pièce structurale d'un aéronef, lors d'une étape du procédé de réparation selon un mode de réalisation de l'invention,
Fig. 17 est une vue de côté d'un aéronef.

### DESCRIPTION DÉTAILLÉE DE L'INVENTION

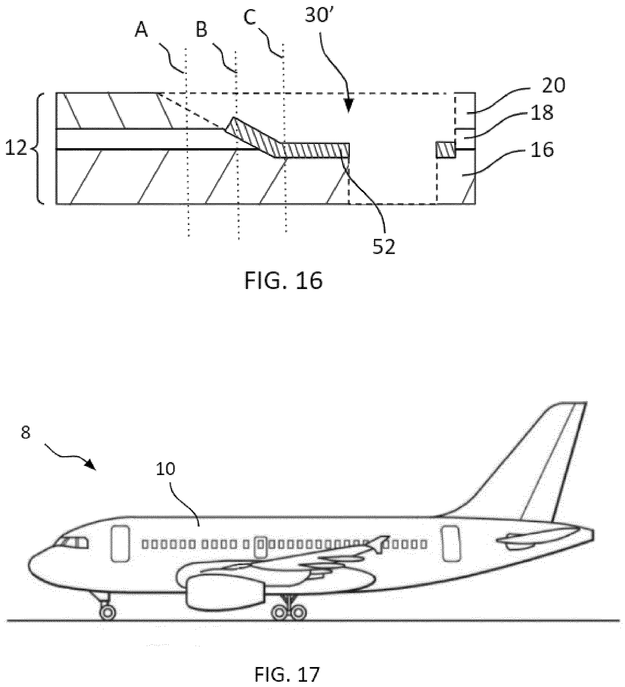

Comme représenté sur la Figure 17, un aéronef 8 comporte une structure 10. Cette structure 10 comporte une pluralité de pièces structurales 12, 14, qui sont peintes, puis assemblées ensemble par des moyens de fixation. Les pièces structurales 12, 14 peuvent être, de façon non limitative, des éléments de la structure de l'aéronef qui constituent une interface avec le réservoir de carburant de l'aéronef, comme par exemple la voilure, ou le caisson central de voilure de l'aéronef. Lors de l'assemblage de ces pièces structurales d'aéronef 12, 14, des défauts, tels que des rayures ou des impacts, peuvent être réalisés sur la peinture de l'une des pièces structurales 12. Ces endommagements de la peinture des pièces structurales peuvent entraîner des défauts de protection de ladite pièce structurale.

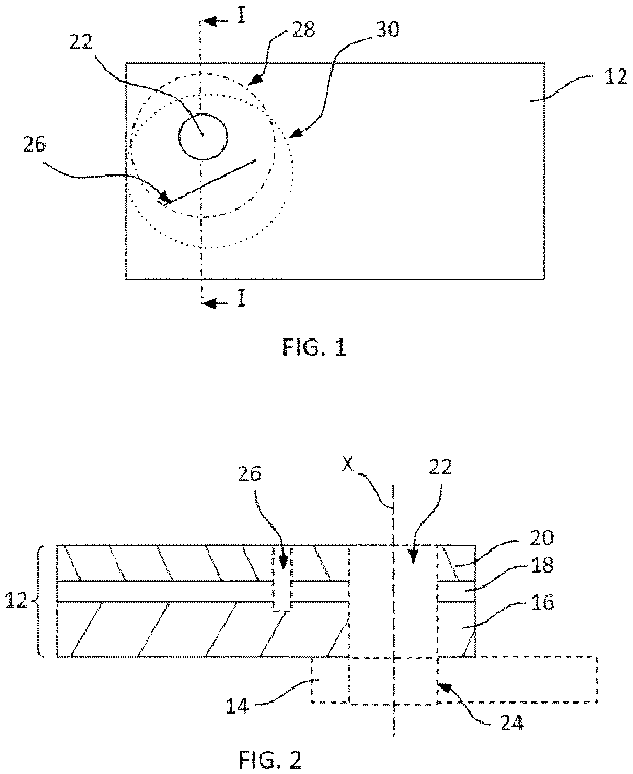

Les figures 1 et 2 représentent des pièces structurales d'aéronef 12, 14, destinées à être assemblées l'une à l'autre. La pièce structurale d'aéronef 12 comporte un corps 16 en métal, par exemple en alliage d'aluminium, qui est recouvert d'une couche d'oxyde d'aluminium 18 après avoir subi un traitement d'anodisation (traitement de surface spécifique de l'aluminium qui consiste à créer par électrolyse une couche uniforme très résistante d'oxyde d'aluminium). Par exemple, l'épaisseur de la couche d'oxyde d'aluminium 18 est comprise entre 1 et 5 microns. Cette pièce structurale d'aéronef 20 est également recouverte d'au moins une couche de peinture 20. Par exemple, la pièce structurale d'aéronef 20 peut être recouverte d'une unique couche de peinture 20, comme représenté sur la figure 2, ou d'une première couche de peinture, dite peinture primaire, et d'une deuxième couche de peinture, dite peinture de finition. L'application d'une ou de plusieurs couches de peinture sur une pièce structurale d'un aéronef dépend de la localisation de ladite pièce structurale dans l'aéronef. En effet, en fonction de la localisation de la pièce structurale dans l'aéronef, ladite pièce structurale est soumise à différentes conditions pouvant entraîner l'apparition de corrosion, et donc nécessite un niveau de protection anti-corrosion plus ou moins important. L'application d'une deuxième couche de peinture de finition est réalisée sur certaines pièces structurales seulement, en fonction de leur localisation dans l'aéronef. Dans tous les cas, la pièce structurale est recouverte d'au moins une couche de peinture de protection. L'unique couche de peinture 20 ou la première couche de peinture contiennent généralement des inhibiteurs de corrosion. L'épaisseur de la couche de peinture 20 est, par exemple, d'environ 25 microns. La pièce structurale d'aéronef 12 comporte également un orifice 22 de réception de moyens de fixation. Cet orifice 22 s'étend selon l'axe noté X sur la figure 2. Une couche d'oxyde d'aluminium 18 ou de peinture 20 s'étend dans un plan orthogonal à l'axe X, comme représenté sur la figure 2. L'orifice 22 traverse la pièce structurale d'aéronef 20, c'est-à-dire que l'orifice 22 débouche de part et d'autre de la pièce structurale d'aéronef 20. De même, la pièce structurale d'aéronef 14 comporte un orifice 24 qui est coaxial avec l'orifice 22 de la pièce structurale d'aéronef 12, de manière à ce que les moyens de fixation puissent être insérés dans lesdits orifices 22, 24 pour fixer les pièces structurales d'aéronef 12, 14 entre elles.

La pièce structurale d'aéronef 12 présente un défaut 26, qui traverse la couche de peinture 20 et la couche d'oxyde d'aluminium 18, et qui peut pénétrer jusque dans l'épaisseur du corps 16. Au niveau de ce défaut 26, le corps 16 n'est plus protégé par l'oxyde d'aluminium, ni par la peinture, et de ce fait, le corps 16 ne présente pas à l'endroit du défaut 26 des propriétés anti-corrosion et anti-foudre optimales. Bien entendu, tous les défauts 26 n'atteignent pas forcément le corps 16. Certains défauts 26 peuvent ne pénétrer qu'une partie de la couche de peinture 20, ou traverser la couche de peinture 20 et ne pénétrer qu'une partie de la couche d'oxyde d'aluminium 18. Est considéré comme un défaut, un endommagement qui pénètre au moins une partie de la couche de peinture 20.

Ce défaut 26 se situe à proximité de l'orifice 22 de réception des moyens de fixation. Par "à proximité", on entend que pour un diamètre D des moyens de fixation, le défaut 26 se situe dans une zone centrée sur l'orifice 22 de réception des moyens de fixation ayant un diamètre inférieur ou égal à cinq fois le diamètre D des moyens de fixation. La zone 28 représentée sur la figure 1 représente une zone considérée comme étant à proximité de moyens de fixation. Cette zone 28 intègre le défaut 26. De ce fait, la zone 30 représentée sur la figure 1, centrée sur le défaut 26 et incluant l'orifice 22 de réception des moyens de fixation, est considérée comme une zone endommagée de la pièce structurale d'aéronef 12 qui est à réparer.

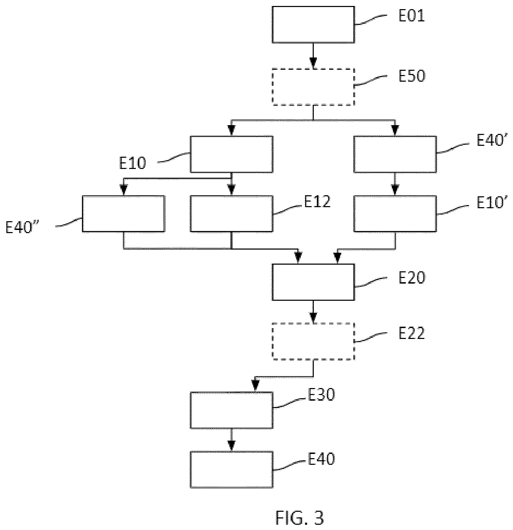

La figure 3 représente un organigramme des différentes étapes du procédé de réparation de la zone endommagée 30 de la pièce structurale d'aéronef 12.

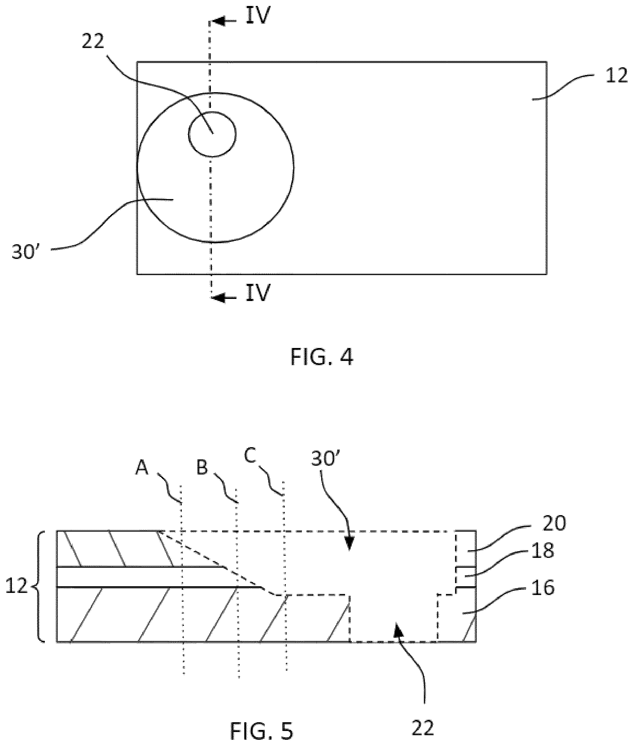

Le procédé comporte une première étape E01 de ponçage de la zone endommagée 30, afin de lisser, c'est-à-dire d'estomper, le défaut 26, et donc d'enlever une partie de la peinture de la zone endommagée 30. En particulier, la peinture de la zone endommagée 30, qui se trouve autour du défaut 26, est poncée. Les figures 4 et 5 représentent la pièce structurale d'aéronef 12 suite à cette étape E01 de ponçage. Sur la zone endommagée poncée 30', une partie de la couche de peinture 20 et une partie de la couche d'oxyde d'aluminium 18 ont été retirées, de manière à ce que le corps 16 de la pièce structurale d'aéronef en métal ou en aluminium soit mis à nu, c'est-à-dire soit brut, sur cette zone 30'. En particulier, les couches de peinture 20 et d'oxyde d'aluminium 18 situées entre le défaut 26 et l'orifice 22 de réception des moyens de fixation ont été retirées. Le défaut 26 n'est alors plus visible.

En périphérie de la zone endommagée poncée 30', une transition lisse, graduelle est visible entre le corps 16 et la surface S de la pièce structurale d'aéronef 12. Ceci permet de ne pas avoir une transition abrupte, angulaire entre la surface S de la pièce structurale d'aéronef 12 et le fond de la zone endommagée 30'. Par exemple, comme visible sur la figure 5, au niveau de la ligne A, le fond de la zone endommagée poncée 30' correspond à la couche de peinture 20, tandis qu'au niveau de la ligne B, le fond de la zone endommagée poncée 30' correspond à la couche d'oxyde d'aluminium 18, et au niveau de la ligne C, le fond de la zone endommagée poncée 30' correspond au corps 16 de la pièce structurale d'aéronef 12.

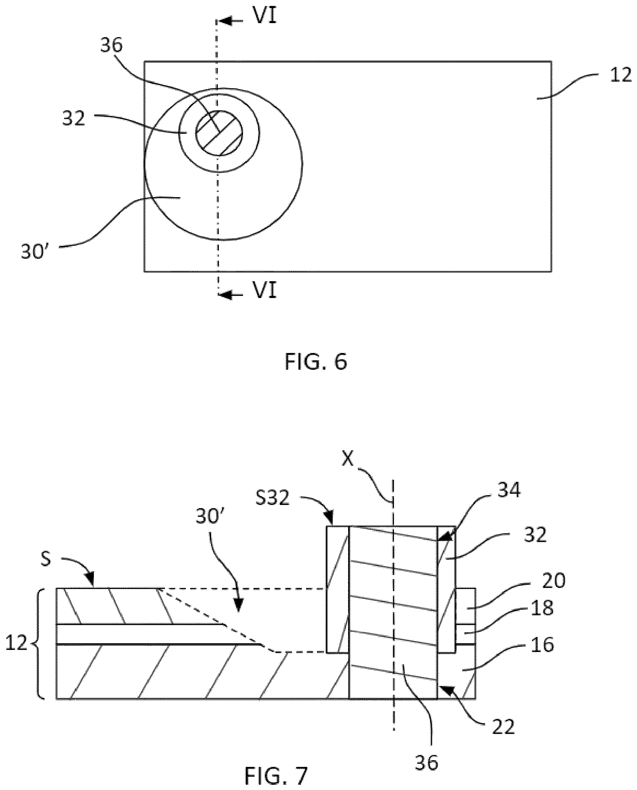

Selon un premier mode de réalisation, le procédé comprend ensuite une étape E10 de disposition de moyens d'isolation 32 sur le corps 16 de la pièce structurale d'aéronef, dans la zone 30', autour de l'orifice 22 de réception des moyens de fixation. Les moyens d'isolation 32 peuvent être disposés directement sur le corps 16 brut de la pièce structurale, ou sur la couche d'oxyde d'aluminium 18, ou encore sur une couche de peinture 40. Les figures 6 et 7 représentent la pièce structurale d'aéronef 12 suite à cette étape E10. Les moyens d'isolation 32 sont de forme sensiblement cylindrique à base annulaire, et s'étendent depuis le corps 16, dans une direction orthogonale audit corps 16 (selon l'axe X). Les moyens d'isolation 32 présentent un orifice 34 s'étendant selon l'axe X et de diamètre sensiblement égal au diamètre de l'orifice 22 des moyens de réception. Les moyens d'isolation 32 sont disposés dans la zone 30' de manière à ce que l'orifice 34 desdits moyens d'isolation 32 et l'orifice 22 des moyens de réception soient coaxiaux. Les moyens d'isolation 32 ont une épaisseur (dimension selon l'axe X) comprise entre 30 microns et 200 microns. Ainsi, les moyens d'isolation 32 forment une protubérance par rapport à la surface S de la pièce structurale d'aéronef 12 en dehors de la zone endommagée 30. Les moyens d'isolation 32 peuvent prendre la forme d'un adhésif sensible à la pression, qui est enduit sur un matériau de support, par exemple un film en matériau plastique. Une seule surface des moyens d'isolation est adhésive. La partie adhésive des moyens d'isolation 32 est destinée à être en contact avec le corps 16 de la pièce structurale d'aéronef, dans la zone 30', autour de l'orifice 22 de réception des moyens de fixation, tandis que la partie non-adhésive des moyens d'isolation 32 est destinée à être en regard de la tête 50 des moyens de fixation 46. Ainsi, les moyens d'isolation 32 peuvent être collés sur le corps 16 de la pièce structurale d'aéronef, dans la zone 30', autour de l'orifice 22 de réception des moyens de fixation. Selon une configuration, les moyens d'isolation 32 peuvent être réalisés en vinyle, en polyuréthane ou en époxy. Selon une configuration, les moyens d'isolation 32 comportent un inhibiteur de corrosion, afin d'améliorer les propriétés anti-corrosion de la pièce structurale d'aéronef 12 au niveau de la fixation.

Selon ce premier mode de réalisation, le procédé comprend ensuite une étape E12 de disposition de moyens de masquage 36 dans l'orifice 34 des moyens d'isolation 32. Les moyens de masquage 36 sont de forme générale cylindrique à base circulaire. Les moyens de masquage 36 ont une forme complémentaire à la forme de l'orifice 34 des moyens d'isolation. Le diamètre des moyens de masquage 36 est sensiblement égal au diamètre de l'orifice 34 des moyens d'isolation 32. Les moyens de masquage 36 peuvent avoir une longueur (dimension selon l'axe X) suffisante pour être inséré jusque dans l'orifice 22 de réception des moyens de fixation, comme représenté sur la figure 7. Autrement dit, les moyens de masquage 36 peuvent avoir une longueur supérieure à l'épaisseur des moyens d'isolation 32. Les moyens de masquage 36 sont insérés dans l'orifice 34 des moyens d'isolation de manière à affleurer la surface supérieure S32 des moyens d'isolation 32. En alternative, les moyens de masquage 36 peuvent être insérés dans l'orifice 34 des moyens d'isolation 32 en dépassant de la surface supérieure S32 de ces derniers. Les moyens de masquage 36 peuvent prendre la forme d'un bouchon ou d'un pion, qui est destiné à être retiré de la pièce structurale d'aéronef 12. Les moyens de masquage 36 sont ainsi amovibles. Les moyens de masquage 36 s'étendant en partie en dehors de l'orifice 34 des moyens d'isolation 32 sont plus facilement préhensible que lorsque les moyens de masquage 36 sont entièrement insérés dans l'orifice 34 des moyens d'isolation 32.

Selon ce premier mode de réalisation, le procédé comprend une étape E20 d'application d'une première couche de peinture 40 primaire sur la zone de pièce structurale d'aéronef poncée 30'. Cette étape E20 correspond à un traitement de surface anti-corrosion. Cette couche de peinture 40 est également appliquée sur les moyens d'isolation 32 et sur les moyens de masquage 36. Par exemple, l'épaisseur de la couche de peinture 40 primaire est d'environ 25 microns. En particulier, les moyens d'isolation 32 sont réalisés dans un matériau sur lequel la peinture 40 primaire adhère.

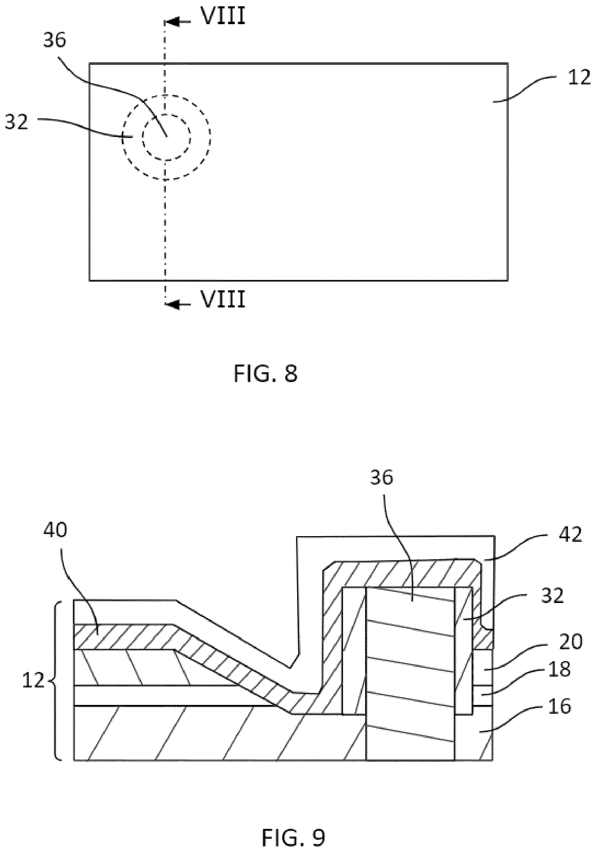

Selon ce premier mode de réalisation, le procédé comprend ensuite une étape E22 d'application d'une deuxième couche de peinture 42 de finition sur la première couche de peinture 40. Par exemple, l'épaisseur de la couche de peinture 44 de finition est d'environ 25 microns. Cette étape E22 est optionnelle, et dépend de la pièce structurale d'aéronef 12, et notamment de sa localisation dans l'aéronef. Les figures 8 et 9 représentent la pièce structurale d'aéronef 12 suite à cette étape E22. Comme visible sur la figure 8, une fois les couches de peinture 40, 42 appliquées, il n'est plus possible de déterminer la localisation exacte du défaut 26, puisque ce dernier a été réparé. De façon connue, la position des moyens de masquage 36 a préalablement été repérée, de manière à ce que ces moyens de masquage puissent être retirés facilement. Lorsque les moyens de masquage 36 affleurent la surface supérieure S32 des moyens d'isolation 32, les couches de peinture 40, 42 sont réparties de manière plus uniforme sur les moyens d'isolation, que lorsque ces moyens de masquage dépassent au-delà de l'orifice 34 des moyens d'isolation 32.

Selon ce premier mode de réalisation, le procédé comprend ensuite une étape E30 de retrait des moyens de masquage 36 de l'orifice 34 des moyens d'isolation 32, et le cas échéant de l'orifice 22 de réception des moyens de fixation. Les moyens de masquage 36 recouverts des couches de peinture 40, 42 sont retirés des orifices 34, 22, de manière à laisser libre place aux moyens de fixation. Les moyens de masquage 36 présentant un diamètre égal au diamètre de l'orifice des moyens d'isolation 32, seules les couches de peinture 40, 42 au niveau des moyens de masquage 36 sont retirées, ce qui laisse l'orifice 34 des moyens d'isolation 32 libre et la surface supérieure S32 des moyens d'isolation 32 recouverte des couches de peinture 40, 42.

Selon ce premier mode de réalisation, le procédé comprend ensuite une étape d'insertion E40 des moyens de fixation 46 dans l'orifice 34 des moyens d'isolation 32, dans l'orifice 22 de réception des moyens de fixation, et dans l'orifice 24 de la pièce structurale d'aéronef 14.

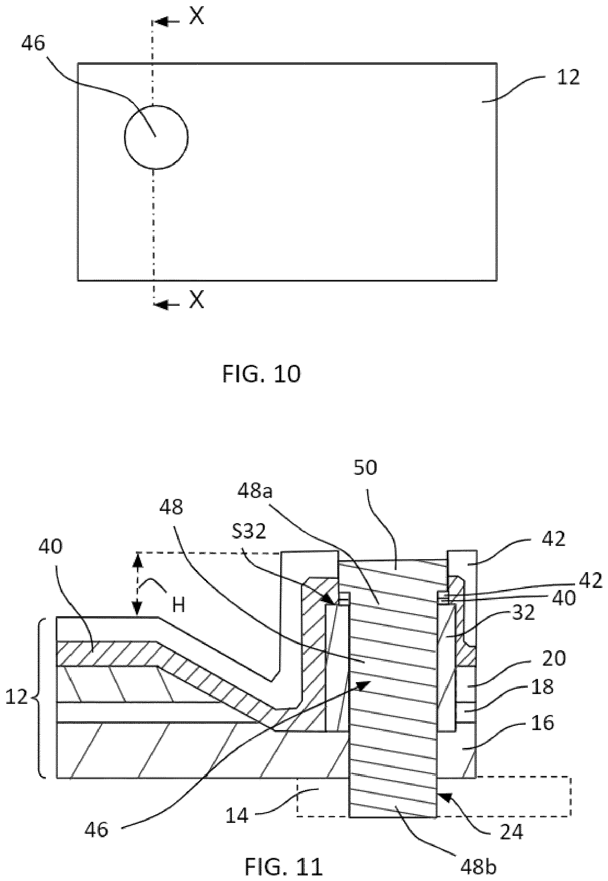

Cette étape E40 peut être réalisée avant que le temps de séchage de la couche de peinture 42 ne soit expiré. Les figures 10 et 11 représentent les pièces structurales d'aéronef 12, 14 suite à cette étape E40. Les moyens de fixation 46 prennent la forme d'une tige 48 présentant une première extrémité 48a et une deuxième extrémité 48b, ainsi qu'une tête 50 à la première extrémité 48a de la tige 48. Le diamètre de la tête 50 est supérieur au diamètre de la tige 48. Le diamètre de la tige 48 est sensiblement égal au diamètre de l'orifice 34 des moyens d'isolation 32. Les moyens de fixation 46 sont insérés dans l'orifice 46, puis dans l'orifice 22, puis dans l'orifice 24 par la deuxième extrémité 48b de la tige 48. Le diamètre externe des moyens d'isolation 32 est supérieur au diamètre de la tête 50. Au cours de l'étape d'insertion E40 des moyens de fixation 46, la tête 50 vient en appui contre la couche de peinture 42. Plus précisément, lors de la fixation des moyens de fixation 46, au cours du séchage de la couche de peinture 42, la tête 50 vient au contact de la couche de peinture 42, ce qui entraîne une craquelure, ou un fluage, ou un déplacement de la peinture en dehors de la zone qui est en regard de la tête 50 des moyens de fixation 46 et au dessus de la surface supérieure S32 des moyens d'isolation. Une partie de la peinture 42 (comme représenté sur la figure 11) peut rester présente entre la tête 50 et les moyens d'isolation 32, mais pas forcément sur toute la surface entre les moyens de fixation 46 et les moyens d'isolation 32. De même avec la couche de peinture 40, dont une partie seulement peut rester présente entre la tête 50 des moyens de fixation 46 et les moyens d'isolation 32. Dans tous les cas, les moyens de fixation 46, réalisés en matériau métallique, sont au contact soit avec une couche de peinture 40, 42, soit directement avec les moyens d'isolation 32 (dans le cas où toute la peinture aurait été expulsée de la zone entre la tête 50 et la surface supérieure S32 des moyens d'isolation 32, ou dans le cas où une craquelure serait apparue sur toute l'épaisseur des couches de peinture 40, 42). Les couches de peinture 40, 42 et les moyens d'isolation 32 étant dans des matériaux non-métalliques, le risque de corrosion galvanique entre les moyens de fixation 46 et la pièce structurale d'aéronef 12 est fortement diminué, et les exigences électromagnétiques sont respectées.

Selon une caractéristique, les moyens de fixation 46 comportent une rondelle (non représentée sur les figures) destinée à être agencée sous la tête 50 des moyens de fixation et à venir en appui contre la couche de peinture 42 au cours de l'étape d'insertion E40 des moyens de fixation 46. Le diamètre externe des moyens d'isolation 32 est supérieur au diamètre de la rondelle. Lors de la fixation des moyens de fixation 46, une partie de la peinture 42 peut rester présente entre la rondelle et les moyens d'isolation 32, mais pas forcément sur toute la surface entre les moyens de fixation 46 et les moyens d'isolation 32. De même avec la couche de peinture 40, dont une partie seulement peut rester présente entre la rondelle et les moyens d'isolation 32. Dans tous les cas, les moyens de fixation 46, réalisés en matériau métallique, sont au contact soit avec une couche de peinture 40, 42, soit directement avec les moyens d'isolation 32 (dans le cas où toute la peinture aurait été expulsée de la zone entre la rondelle et la surface supérieure S32 des moyens d'isolation 32, ou dans le cas où une craquelure serait apparue sur toute l'épaisseur des couches de peinture 40, 42).

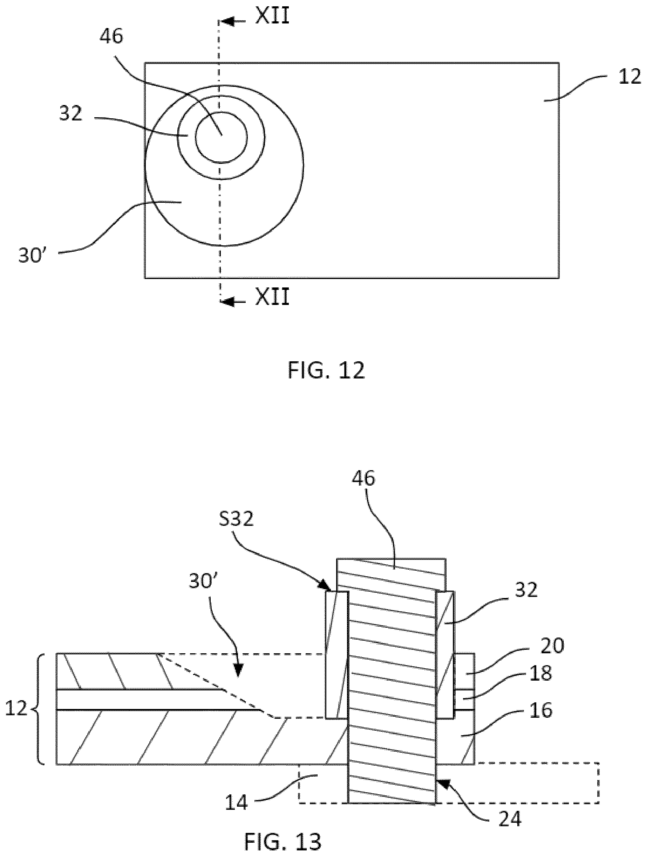

Selon un deuxième mode de réalisation, le procédé comprend, suite à l'étape E01 de ponçage et préalablement à l'étape E20 d'application d'une première couche de peinture, en variante des étapes E10 et E12, une étape E40' d'insertion de moyens de fixation 46 dans l'orifice 34 des moyens d'isolation 32. La tête 50 des moyens de fixation 46 vient en appui contre la surface supérieure S32 des moyens d'isolation 32. Selon ce deuxième mode de réalisation, le procédé comprend ensuite une étape E10' de disposition des moyens d'isolation 32, conjointement avec les moyens de fixation 46, sur le corps 16 de la pièce structurale d'aéronef, dans la zone 30', autour de l'orifice 22 de réception des moyens de fixation. Au cours de cette étape E10', les moyens d'isolation 32 sont disposés de sorte que les moyens de fixation 46 sont insérés dans l'orifice 22 de réception des moyens de fixation et dans l'orifice 24 de la pièce structurale d'aéronef 14. Les figures 12 et 13 représentent la pièce structurale d'aéronef 12 suite à cette étape E10'. Les moyens de fixation 46, réalisés en métal, sont au contact directement avec les moyens d'isolation 32. Le risque d'apparition de corrosion galvanique entre les moyens de fixation 46 et la pièce structurale d'aéronef 12 est alors très fortement limité.

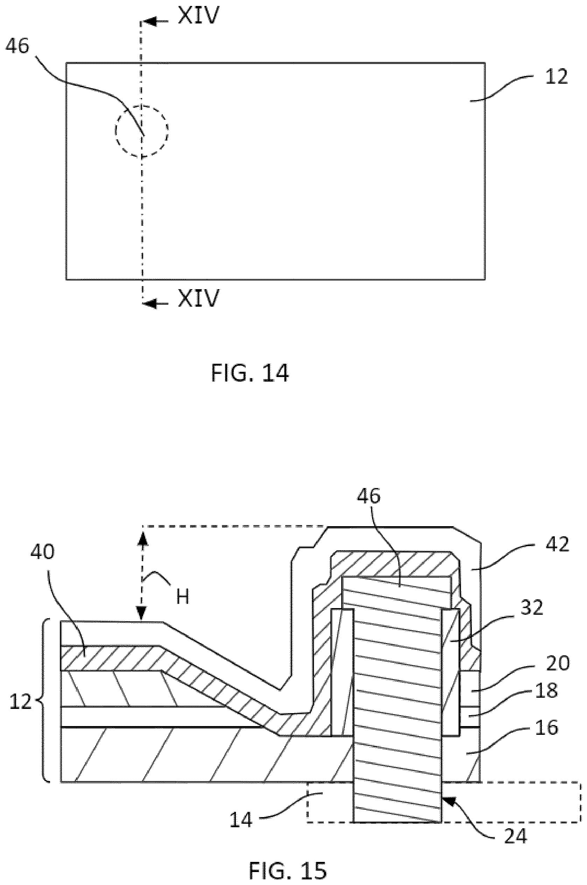

Selon ce deuxième mode de réalisation, la couche de peinture 40 est appliquée sur les moyens d'isolation 32 et sur les moyens de fixation 46. En effet, les moyens de fixation sont disposés avant l'application des couches de peinture. En particulier, les moyens d'isolation 32 et les moyens de fixation 46 sont réalisés dans un matériau sur lequel la peinture 40 primaire adhère. Les figures 14 et 15 représentent la pièce structurale d'aéronef 12 suite à l'étape E22 selon ce deuxième mode de réalisation. Comme visible sur la figure 14, une fois les couches de peinture 40, 42 appliquées, il n'est plus possible de déterminer la localisation exacte du défaut 26, puisque ce dernier a été réparé.

Avantageusement, dans ce deuxième mode de réalisation, les moyens de fixation sont peints, et donc non visibles après application des couches de peinture 40,42 par rapport au premier mode de réalisation décrit.

En variante à ce deuxième mode de réalisation, le procédé comprend, suite à l'étape E10 de disposition de moyens d'isolation et préalablement à l'étape E20 d'application d'une première couche de peinture 40, en variante des étapes E10' et E12, une étape E40" d'insertion de moyens de fixation 46 dans l'orifice 34 des moyens d'isolation 32 et dans l'orifice 22 de réception des moyens de fixation 46. Les moyens d'isolation 32 sont donc agencés sur la pièce structurale préalablement à l'insertion des moyens de fixation 46, et non pas simultanément avec les moyens de fixation 46, comme dans le deuxième mode de réalisation.

Comme représenté sur les figures 11 et 15, après les différentes étapes du procédé de réparation, il y a une différence de hauteur (notée H, selon l'axe X) entre la surface supérieure S42 de la deuxième couche de peinture 42 au niveau de la pièce structurale d'aéronef 12 en dehors de la zone 30 qui était endommagée et au niveau des moyens de fixation 46 ou à proximité desdits moyens de fixation 46. En effet, la surface supérieure S42 n'est pas linéaire. Cette différence de hauteur H n'est pas visible à l'œil nu, ou est minime. De ce fait, la réparation du défaut 26 de peinture n'est pas visible extérieurement après réparation (seule la présence des moyens d'isolation 32 permet d'indiquer la présence d'un défaut de protection ayant subi le procédé de réparation selon l'invention).

Selon une autre mode de réalisation, après l'étape E01 de ponçage, et préalablement à l'étape E20 d'application d'une première couche de peinture, le procédé comprend une étape E50 de traitement de surface de la zone de la pièce structurale d'aéronef poncée 30', au cours de laquelle un traitement de surface 52, par exemple un revêtement de conversion chimique ou un apprêt réactif, est appliqué sur une partie de la zone de la pièce structurale d'aéronef poncée 30'. Ce traitement de surface 52 permet une meilleure adhérence de la couche de peinture primaire. Le traitement de surface peut être réalisé par bain, ou de manière locale. La figure 16 représente la pièce structurale d'aéronef 12 suite à cette étape E50. En particulier, le traitement de surface 52 n'est pas appliqué sur une couche pré-existante de peinture primaire 20, mais uniquement sur une couche pré-existante d'oxyde d'aluminium 18 ou sur le corps 16 brut de la pièce structurale d'aéronef 12. De préférence, le traitement de surface, local ou en bain, est appliqué uniquement sur le corps 16 brut de la pièce structurale d'aéronef 12. En effet, il est préférable d'éviter une superposition des traitements de surface. Selon un mode de réalisation, lors de l'étape E01 de ponçage, la couche d'oxyde d'aluminium 18 étant fine (environ entre 1 micron et 5 microns), celle-ci est entièrement retirée, ce qui permet d'appliquer le traitement de surface 52 uniquement sur le corps 16 brut de la pièce structurale d'aéronef 12. Par exemple, comme représenté sur la figure 16, le traitement de surface 52 est appliqué au niveau des lignes B et C, mais pas au niveau de la ligne A. Ce traitement de surface 52 n'est en effet pas nécessaire au niveau de la couche de peinture primaire 20. Ce traitement de surface 52 a une durée de séchage comprise entre 30 minutes et 1 heure. Par exemple, l'épaisseur de ce traitement de surface 52 est inférieure ou égale à 1 micron. La couche d'oxyde d'aluminium 18 peut avoir une épaisseur d'environ 5 microns après un traitement de surface en bain, et une épaisseur d'environ 1 micron après un traitement de surface local de type conversion chimique.

Quel que soit le mode de réalisation, la présence des moyens d'isolation 32 entre les moyens de fixation 46 et la pièce structurale d'aéronef 12 de l'aéronef permet d'établir une barrière isolante entre le matériau métallique constituant lesdits moyens de fixation 46 et le matériau métallique constituant ladite pièce structurale d'aéronef, ce qui permet de diminuer le risque d'apparition de corrosion galvanique lors de la réparation d'un défaut à proximité de ladite fixation, et d'assurer les exigences électromagnétiques tout au long de la pièce structurale de l'aéronef.

En outre, cela permet de rendre la réparation du défaut de protection indépendante du temps de séchage de la peinture appliquée sur ladite pièce structurale de l'aéronef.

## Revendications

1. Procédé de réparation d'une zone (30) d'une pièce structurale (12) métallique d'un aéronef présentant un défaut (26) de protection, ladite zone (30) de la pièce structurale présentant un premier orifice (22) de réception de moyens de fixation métalliques, ledit premier orifice (22) présentant un premier diamètre, ledit procédé de réparation comprenant:
- une étape (E01) de ponçage au cours de laquelle la peinture de ladite zone (30) de la pièce structurale d'aéronef est poncée,
**caractérisé en ce que** ledit procédé de réparation comprend également:
- une étape (E10, E10') de disposition de moyens d'isolation (32) au cours de laquelle des moyens d'isolation (32) sont disposés sur ladite zone de la pièce structurale d'aéronef poncée (30') autour dudit premier orifice (22), lesdits moyens d'isolation (32) comportant un deuxième orifice (34) présentant un deuxième diamètre sensiblement égal au premier diamètre du premier orifice (22), lesdits moyens d'isolation (32) étant disposés sur ladite zone de la pièce structurale d'aéronef poncée (30') autour du premier orifice (22) de manière à ce que lesdits premier et deuxième orifices (22, 34) soient coaxiaux,
- une étape (E20) d'application d'au moins une couche de peinture (40) au cours de laquelle une couche de peinture (40) primaire est appliquée sur la zone de la pièce structurale d'aéronef poncée (30'), ladite couche de peinture (40) primaire étant appliquée sur lesdits moyens d'isolation (32).

2. Procédé de réparation selon la revendication 1, comprenant, préalablement à l'étape (E10') de disposition des moyens d'isolation (32), une étape (E40') d'insertion de moyens de fixation (46) au cours de laquelle des moyens de fixation (46) sont insérés dans le deuxième orifice (34) des moyens d'isolation (32), et au cours de l'étape (E10') de disposition des moyens d'isolation (32), les moyens de fixation (46) sont insérés dans le premier orifice (22), et au cours de l'étape (E20) d'application de la couche de peinture (40), ladite couche de peinture (40) est appliquée sur lesdits moyens de fixation (46).

3. Procédé de réparation selon la revendication 2, dans lequel les moyens de fixation (46) prennent la forme d'une tige (48) présentant des première et deuxième extrémités (48a, 48b), et une tête (50) à ladite première extrémité (48a), lesdits moyens de fixation (46) étant insérés dans les premier et deuxième orifices (22, 34) par la deuxième extrémité (48b) de la tige (48), dans lequel le diamètre externe des moyens d'isolation (32) est supérieur au diamètre de la tête (50) des moyens de fixation (46), et dans lequel au cours de l'étape (E40') d'insertion de moyens de fixation (46), la tête (50) desdits moyens de fixation (46) vient en appui contre lesdits moyens d'isolation (32).

4. Procédé de réparation selon la revendication 1, comprenant, préalablement à l'étape (E20) d'application de la couche de peinture (40), une étape (E40") d'insertion de moyens de fixation (46) au cours de laquelle des moyens de fixation (46) sont insérés dans le deuxième orifice (34) des moyens d'isolation (32) et dans le premier orifice (22), et au cours de l'étape (E20) d'application de la couche de peinture (40), ladite couche de peinture (40) est appliquée sur lesdits moyens de fixation (46).

5. Procédé de réparation selon la revendication 1, comprenant, préalablement à l'étape (E20) d'application de la couche de peinture (40), une étape (E12) de disposition de moyens de masquage (36) au cours de laquelle des moyens de masquage (36) sont disposés dans les premier et deuxième orifices (22, 34), et après l'étape (E20) d'application de la couche de peinture (40), une étape (E30) de retrait des moyens de masquage (36) au cours de laquelle les moyens de masquage (36) sont retirés des premier et deuxième orifices (22, 34), et une étape (E40) d'insertion des moyens de fixation (46) au cours de laquelle des moyens de fixation (46) sont insérés dans les premier et deuxième orifices (22, 34).

6. Procédé de réparation selon la revendication 5, dans lequel les moyens de fixation (46) prennent la forme d'une tige (48) présentant des première et deuxième extrémités (48a, 48b), et une tête (50) à ladite première extrémité (48a), lesdits moyens de fixation (46) étant insérés dans les premier et deuxième orifices (22, 34) par la deuxième extrémité (48b) de la tige (48), dans lequel le diamètre externe des moyens d'isolation (32) est supérieur au diamètre de la tête (50) des moyens de fixation (46), et dans lequel au cours de l'étape (E40') d'insertion de moyens de fixation (46), la tête (50) desdits moyens de fixation (46) vient en appui contre la couche de peinture (40).

7. Procédé de réparation selon l'une des revendications 1 à 6, comprenant, après l'étape (E01) de ponçage, une étape (E50) de traitement de surface au cours de laquelle un revêtement de conversion chimique ou un apprêt réactif (52) est appliqué sur au moins une partie de ladite zone de la pièce structurale d'aéronef poncée (30').

8. Procédé de réparation selon l'une des revendications précédentes, dans lequel les moyens d'isolation (32) prennent la forme d'un adhésif sensible à la pression enduit sur un matériau de support.

9. Procédé de réparation selon l'une des revendications précédentes, dans lequel les moyens d'isolation (32) sont réalisés en vinyle, en polyuréthane ou en époxy.

10. Procédé de réparation selon l'une des revendications précédentes, dans lequel les moyens d'isolation (32) comportent un inhibiteur de corrosion.

11. Procédé de réparation selon l'une des revendications précédentes, dans lequel les moyens d'isolation (32) ont une épaisseur comprise entre 30 et 200 microns.

12. Pièce structurale métallique d'aéronef (12) présentant une zone (30) réparée au moyen du procédé de réparation selon l'une des revendications précédentes.

## Patentansprüche

1. Verfahren zur Reparatur eines Bereichs (30) eines metallischen Strukturbauteils (12) eines Flugzeugs, das einen Schutzfehler (26) aufweist, wobei der Bereich (30) des Strukturbauteils eine erste Öffnung (22) zur Aufnahme von metallischen Befestigungsmitteln aufweist, wobei die erste Öffnung (22) einen ersten Durchmesser aufweist, wobei das Reparaturverfahren Folgendes beinhaltet:
- einen Schritt (E01) des Abschleifens, während dessen die Farbe des Bereichs (30) des Flugzeugstrukturbauteils abgeschliffen wird,
**dadurch gekennzeichnet, dass** das Reparaturverfahren ferner Folgendes beinhaltet:
- einen Schritt (E10, E10') des Anordnens von Isoliermitteln (32), während dessen Isoliermittel (32) auf dem Bereich des abgeschliffenen Flugzeugstrukturbauteils (30') um die erste Öffnung (22) herum angeordnet werden, wobei die Isoliermittel (32) eine zweite Öffnung (34) umfassen, die einen zweiten Durchmesser aufweist, der im Wesentlichen gleich dem ersten Durchmesser der ersten Öffnung (22) ist, wobei die Isoliermittel (32) auf dem Bereich des abgeschliffenen Flugzeugstrukturbauteils (30') um die erste Öffnung (22) herum so angeordnet werden, dass die erste und die zweite Öffnung (22, 34) koaxial sind,
- einen Schritt (E20) des Aufbringens mindestens einer Farbschicht (40), während dessen eine primäre Farbschicht (40) auf den Bereich des abgeschliffenen Flugzeugstrukturbauteils (30') aufgebracht wird, wobei die primäre Farbschicht (40) auf die Isoliermittel (32) aufgebracht wird.

2. Reparaturverfahren nach Anspruch 1, das vor dem Schritt (E10') des Anordnens der Isoliermittel (32) einen Schritt (E40') des Einführens von Befestigungsmitteln (46) beinhaltet, während dessen Befestigungsmittel (46) in die zweite Öffnung (34) der Isoliermittel (32) eingeführt werden, und wobei während des Schritts (E10') des Anordnens der Isoliermittel (32) die Befestigungsmittel (46) in die erste Öffnung (22) eingeführt werden und während des Schritts (E20) des Aufbringens der Farbschicht (40) die Farbschicht (40) auf die Befestigungsmittel (46) aufgebracht wird.

3. Reparaturverfahren nach Anspruch 2, wobei die Befestigungsmittel (46) die Form einer Stange (48) annehmen, die ein erstes und ein zweites Ende (48a, 48b) und einen Kopf (50) an dem ersten Ende (48a) aufweist, wobei die Befestigungsmittel (46) mit dem zweiten Ende (48b) der Stange (48) in die erste und die zweite Öffnung (22, 34) eingeführt werden, wobei der Außendurchmesser der Isoliermittel (32) größer als der Durchmesser des Kopfes (50) der Befestigungsmittel (46) ist und wobei während des Schritts (E40') des Einführens von Befestigungsmitteln (46) der Kopf (50) der Befestigungsmittel (46) an den Isoliermitteln (32) zur Anlage kommt.

4. Reparaturverfahren nach Anspruch 1, das vor dem Schritt (E20) des Aufbringens der Farbschicht (40) einen Schritt (E40") des Einführens von Befestigungsmitteln (46) beinhaltet, während dessen Befestigungsmittel (46) in die zweite Öffnung (34) der Isoliermittel (32) und in die erste Öffnung (22) eingeführt werden, und wobei während des Schritts (E20) des Aufbringens der Farbschicht (40) die Farbschicht (40) auf die Befestigungsmittel (46) aufgebracht wird.

5. Reparaturverfahren nach Anspruch 1, das vor dem Schritt (E20) des Aufbringens der Farbschicht (40) einen Schritt (E12) des Anordnens von Abdeckmitteln (36), während dessen Abdeckmittel (36) in der ersten und der zweiten Öffnung (22, 34) angeordnet werden, und nach dem Schritt (E20) des Aufbringens der Farbschicht (40) einen Schritt (E30) des Entfernens der Abdeckmittel (36), während dessen die Abdeckmittel (36) aus der ersten und der zweiten Öffnung (22, 34) entfernt werden, und einen Schritt (E40) des Einführens der Befestigungsmittel (46), während dessen Befestigungsmittel (46) in die erste und die zweite Öffnung (22, 34) eingeführt werden, beinhaltet.

6. Reparaturverfahren nach Anspruch 5, wobei die Befestigungsmittel (46) die Form einer Stange (48) annehmen, die ein erstes und ein zweites Ende (48a, 48b) und einen Kopf (50) an dem ersten Ende (48a) aufweist, wobei die Befestigungsmittel (46) mit dem zweiten Ende (48b) der Stange (48) in die erste und die zweite Öffnung (22, 34) eingeführt werden, wobei der Außendurchmesser der Isoliermittel (32) größer als der Durchmesser des Kopfes (50) der Befestigungsmittel (46) ist und wobei während des Schritts (E40') des Einführens von Befestigungsmitteln (46) der Kopf (50) der Befestigungsmittel (46) an der Farbschicht (40) zur Anlage kommt.

7. Reparaturverfahren nach einem der Ansprüche 1 bis 6, das nach dem Schritt (E01) des Abschleifens einen Schritt (E50) der Oberflächenbehandlung beinhaltet, während dessen eine chemische Umwandlungsbeschichtung oder eine Reaktivgrundierung (52) auf mindestens einen Teil des Bereichs des abgeschliffenen Flugzeugstrukturbauteils (30') aufgebracht wird.

8. Reparaturverfahren nach einem der vorhergehenden Ansprüche, wobei die Isoliermittel (32) die Form eines Haftklebstoffs annehmen, der auf ein Trägermaterial appliziert wird.

9. Reparaturverfahren nach einem der vorhergehenden Ansprüche, wobei die Isoliermittel (32) aus Vinyl, aus Polyurethan oder aus Epoxid hergestellt sind.

10. Reparaturverfahren nach einem der vorhergehenden Ansprüche, wobei die Isoliermittel (32) ein Korrosionsschutzmittel umfassen.

11. Reparaturverfahren nach einem der vorhergehenden Ansprüche, wobei die Isoliermittel (32) eine Dicke zwischen 30 und 200 Mikrometern aufweisen.

12. Metallisches Flugzeugstrukturbauteil (12), das einen mit Hilfe des Reparaturverfahrens nach einem der vorhergehenden Ansprüche reparierten Bereich (30) aufweist.

## Claims

1. Method for repairing a zone (30) of a metal structural part (12) of an aircraft exhibiting a protection defect (26), said zone (30) of the structural part having a first orifice (22) for receiving metal fastening means, said first orifice (22) having a first diameter, said repair method comprising:
- a sanding step (E01) during which the paint in said zone (30) of the structural aircraft part is sanded,
**characterized in that** said repair method also comprises:
- a step (E10, E10') of positioning isolating means (32) during which isolating means (32) are positioned on said sanded zone (30') of the structural aircraft part around said first orifice (22), said isolating means (32) comprising a second orifice (34) having a second diameter substantially equal to the first diameter of the first orifice (22), said isolating means (32) being positioned on said sanded zone (30') of the structural aircraft part around the first orifice (22) so that said first and second orifices (22, 34) are coaxial,
- a step (E20) of applying at least one coat of paint (40) during which a coat of primer paint (40) is applied to the sanded zone (30') of the structural aircraft part, said coat of primer paint (40) being applied to said isolating means (32).

2. Repair method according to Claim 1, comprising, prior to the step (E10') of positioning the isolating means (32), a step (E40') of inserting fastening means (46) during which fastening means (46) are inserted into the second orifice (34) of the isolating means (32), and during the step (E10') of positioning the isolating means (32), the fastening means (46) are inserted into the first orifice (22), and during the step (E20) of applying the coat of paint (40), said coat of paint (40) is applied to said fastening means (46).

3. Repair method according to Claim 2, wherein the fastening means (46) take the form of a shank (48) having first and second ends (48a, 48b), and a head (50) at said first end (48a), said fastening means (46) being inserted into the first and second orifices (22, 34) using the second end (48b) of the shank (48), wherein the outer diameter of the isolating means (32) is greater than the diameter of the head (50) of the fastening means (46), and wherein, during the step (E40') of inserting fastening means (46), the head (50) of said fastening means (46) bears against said isolating means (32).

4. Repair method according to Claim 1, comprising, prior to the step (E20) of applying the coat of paint (40), a step (E40") of inserting fastening means (46) during which fastening means (46) are inserted into the second orifice (34) of the isolating means (32) and into the first orifice (22), and during the step (E20) of applying the coat of paint (40), said coat of paint (40) is applied to said fastening means (46).

5. Repair method according to Claim 1, comprising, prior to the step (E20) of applying the coat of paint (40), a step (E12) of positioning masking means (36) during which masking means (36) are positioned in the first and second orifices (22, 34), and after the step (E20) of applying the coat of paint (40), a step (E30) of removing the masking means (36) during which the masking means (36) are removed from the first and second orifices (22, 34), and a step (E40) of inserting the fastening means (46) during which fastening means (46) are inserted into the first and second orifices (22, 34).

6. Repair method according to Claim 5, wherein the fastening means (46) take the form of a shank (48) having first and second ends (48a, 48b), and a head (50) at said first end (48a), said fastening means (46) being inserted into the first and second orifices (22, 34) using the second end (48b) of the shank (48), wherein the outer diameter of the isolating means (32) is greater than the diameter of the head (50) of the fastening means (46), and wherein, during the step (E40') of inserting fastening means (46), the head (50) of said fastening means (46) bears against the coat of paint (40).

7. Repair method according to one of Claims 1 to 6, comprising, after the sanding step (E01), a surface treatment step (E50) during which a chemical conversion coating or a reactive primer (52) is applied to at least part of said sanded zone (30') of the structural aircraft part.

8. Repair method according to one of the preceding claims, wherein the isolating means (32) take the form of a pressure-sensitive adhesive coated on a backing material.

9. Repair method according to one of the preceding claims, wherein the isolating means (32) are made of vinyl, polyurethane or epoxy.

10. Repair method according to one of the preceding claims, wherein the isolating means (32) comprise a corrosion inhibitor.

11. Repair method according to one of the preceding claims, wherein the isolating means (32) have a thickness of between 30 and 200 microns.

12. Metal structural aircraft part (12) having a zone (30) repaired by means of the repair method according to one of the preceding claims.
